# EUROPÄISCHE PATENTSCHRIFT

(11) **EP 1 423 300 B1**
(45) Veröffentlichungstag und Bekanntmachung des Hinweises auf die Patenterteilung: **03.05.2006**
(21) Anmeldenummer: 02772219.8
(22) Anmeldetag: 28.08.2002
(51) Int. Cl.: B60R 16/02, H02J 7/14, G01R 31/36

(54) **VERFAHREN UND VORRICHTUNG ZUR BORDNETZSTABILISIERUNG EINES KRAFTFAHRZEUGBORDNETZES**
METHOD AND DEVICE FOR STABILIZING THE ELECTRIC SYSTEM OF A VEHICLE
PROCEDE ET DISPOSITIF POUR STABILISER UN RESEAU DE BORD D'AUTOMOBILE

(30) Priorität: 30.08.2001 DE 10142086
(43) Veröffentlichungstag der Anmeldung: 02.06.2004
(73) Patentinhaber: Volkswagen AG, 38436 Wolfsburg (DE)
(72) Erfinder: BROSIG, Stefan, 38518 Gifhorn (DE); MANZ, Holger, 38173 Sickte (DE); WAHNSCHAFFE, Nikolaus, 38444 Wolfsburg/Hattorf (DE)
(74) Vertreter: Effert, Bressel und Kollegen
(86) Internationale Anmeldenummer: PCT/EP2002/009606
(87) Internationale Veröffentlichungsnummer: WO 2003/020556

(56) Entgegenhaltungen:
- DE-A- 4 110 495

## Beschreibung

Die Erfindung betrifft ein Verfahren und eine Vorrichtung zur Bordnetzstabilisierung eines Kraftfahrzeugbordnetzes.

In modemen Kraftfahrzeugen nimmt die Anzahl elektrischer Verbraucher permanent zu. Dabei kommen auch verstärkt sicherheitsrelevante Verbraucher zum Einsatz, so dass durch geeignete Maßnahmen sichergestellt werden muß, dass zu jeder Zeit ausreichend elektrische Energie zur Verfügung steht. Hierzu sind verschiedene Maßnahmen vorgeschlagen worden. So ist es beispielsweise bekannt, bei niedrigen Bordnetzspannungen Komfortverbraucher gestuft abzuschalten. Des weiteren ist es bekannt, einzelne Verbraucher in galvanisch entkoppelten Teilbordnetzen anzuordnen und diesen zusätzlichen Energiespeicher in Form von Notbatterien oder Kondensatoren zuzuordnen, so dass der Betrieb dieser Verbraucher auch bei einem Ausfall oder Einbruch des Bordnetzes sichergestellt ist. Nachteilig an den bekannten Maßnahmen ist, dass diese jeweils sehr aufwendig und teuer sind.

Der Erfindung liegt daher das technische Problem zugrunde, ein Verfahren und eine Vorrichtung zu schaffen, mittels derer einfacher ein Einbruch des Kraftfahrzeugbordnetzes verhindert werden kann.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierzu umfasst das Kraftfahrzeugbordnetz mindestens eine Batterie, mindestens einen Lüfter und eine Einrichtung zur Erfassung eines bordnetzkritischen Zustandes, wobei bei Erfassung eines kritischen Bordnetzzustandes der Lüfter eingeschaltet wird. Dabei wird ausgenutzt, dass Lüfter mechanische Energie in Form von Trägheiten speichern können. Fällt dann die Bordnetzspannung ab, so ist die Speisespannung des Lüfters geringer als für die aktuelle Drehzahl erforderlich, die jedoch aufgrund der Massenträgheit noch beibehalten wird. Somit induziert der Lüfter eine Spannung, die dem Spannungseinbruch entgegenwirkt. Der Lüfter arbeitet also generatorisch und speist die mechanisch gespeicherte Energie elektrisch in das Bordnetz zurück. Des weiteren können Spannungsspitzen durch die Tiefpasscharakteristik des Lüfters aufgrund der Trägheit geglättet bzw. vermieden werden. Der Vorteil der Erfindung besteht darin, dass auf zusätzliche Bauteile wie beispielsweise Kondensatoren verzichtet werden kann. Dabei sei angemerkt, dass anstelle eines Lüfters auch andere motorisch angetriebene Verbraucher mit einer Schwungmasse verwendbar sind.

In einer weiteren bevorzugten Ausführungsform wird der Lüfter in Abhängigkeit von dem erfassten bordnetzkritischen Zustand hochgeregelt, so dass die rückspeisbare Energie erhöht wird.

In einer weiteren bevorzugten Ausführungsform wird mittels der Einrichtung zur Erfassung des bordnetzkritischen Zustandes die Funktionalität der Batterie überprüft, wozu vorzugsweise die Welligkeit der Bordnetzspannung überprüft wird. Hierdurch wird sichergestellt, dass bei einer nicht mehr verfügbaren Batterie, beispielsweise aufgrund eines Batteriekabelabrisses, eine dynamische Energieversorgung gewährleistet ist, die ein Generator nicht leisten könnte. Dabei wird die Erkenntnis ausgenutzt, dass bei einem Batterieabriss der Generator im Regelfall noch ausreichend Spannung liefert, so dass über einen einfachen Spannungsvergleich der Bordnetzspannung mit einem Sollwert das Fehlem der Batterie nicht feststellbar wäre. Wird dann ein starker Verbraucher eingeschaltet, so führt dies aufgrund der Trägheit des Generators zu einem Spannungseinbruch. Aufgrund der Zuschaltung des Lüfters im Vorfeld ist hingegen der Generator bereits hochgeregelt und dessen zusätzliche Energie im Lüfter zwischengespeichert.

In einer weiteren bevorzugten Ausführungsform werden zusätzlich Komfortverbraucher abgeschaltet, um die Bordnetzbelastung zu reduzieren.

Vorzugsweise wird der Verbrennungsmotorlüfter zugeschaltet, da dieser eine hohe Lüfterleistung verbunden mit großen Abmessungen und somit Trägheiten besitzt, über den Stromstärken zwischen 30-40 A in das Bordnetz rückspeisbar sind. Prinzipiell können aber auch andere vorhandene Lüfter wie beispielsweise die Innenraumlüfter allein oder zusätzlich angeschaltet werden.

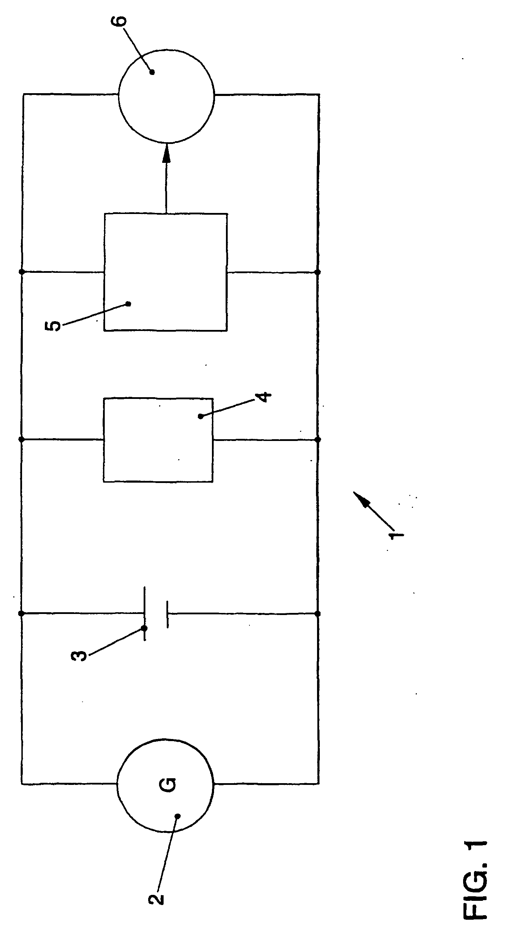

Die Erfindung wird nachfolgend anhand eines bevorzugten Ausführungsbeispieles näher erläutert. Die einzige Figur zeigt ein schematisches Blockschaltbild einer Vorrichtung zur Bordnetzstabilisierung eines Kraftfahrzeugbordnetzes.

Das Kraftfahrzeugbordnetz 1 umfasst einen Generator 2, eine Batterie 3, Bordnetzverbraucher 4, eine Einrichtung 5 zur Erfassung eines bordnetzkritischen Zustandes und einen Lüfter 6. Die Einrichtung 5 ist dabei entweder direkt mit dem Lüfter 6 oder über ein den Lüfter 6 ansteuerndes Steuergerät mit diesem verbunden.

Im Normalzustand liefert der Generator 2 ausreichend Energie für alle Bordnetzverbraucher 4, wobei die Batterie 3 die wellige Generatorspannung glättet und als Puffer für kurzzeitige Spannungsspitzen dient. Erhöht sich der Energiebedarf, so wird der Generator 2 nachgeregelt. Diese Nachregelung der Generatorausgangsspannung benötigt eine gewisse Zeit, innerhalb derer die Batterie 3 als Puffer wirkt. Ist hingegen die Batterie 3 defekt oder steht aus sonstigen Gründen nicht zur Verfügung, so würde ein Zuschalten eines Hochstromverbrauchers zu einem Einbruch der Bordnetzspannung führen. Die Einrichtung 5 zur Erfassung eines kritischen Bordnetzzustandes erfasst hierzu die Bordnetzspannung und schaltet bei Erfassung eines kritischen Bordnetzzustandes den Lüfter 6 ein, bevor ein Hochstromverbraucher zugeschaltet wird. Hierzu wertet die Einrichtung 5 beispielsweise die Welligkeit der Bordnetzspannung aus und schaltet bei einer gewissen Welligkeit der Bordnetzspannung den Lüfter 6 ein. Der Lüftermotor dreht dann mit einer der Bordnetzspannung entsprechenden Drehzahl. Die von dem Lüfter 6 benötigte elektrische Energie wird dabei von dem Generator 2 geliefert, dessen Erregung entsprechend erhöht werden muss.

Wird nun ein Hochstromverbraucher zugeschaltet, so bricht die Bordnetzspannung und somit die Spannung am Lüfter 6 ein. Aufgrund der Trägheit rotiert der Lüfter 6 jedoch weiter und zwar mit einer Drehzahl, die höher ist, als durch die aktuell anliegende Speisespannung vorgegeben. Dadurch wirkt der Lüfter 6 aber als Generator und speist die als kinetische Energie gespeicherte Energie während des Abbremsvorganges als elektrische Energie in das Bordnetz. Der Lüfter 6 wird also generatorisch abgebremst, wobei die eingespeiste elektrische Energie der Ursache der Abbremsung, nämlich dem Spannungseinbruch entgegenwirkt. Diese vom Lüfter 6 zusätzlich in das Kraftfahrzeugbordnetz eingespeiste elektrische Energie steht dem Hochstromverbraucher zur Verfügung, so dass ein tiefer Spannungseinbruch verhindert wird. Insbesondere der Verbrennungsmotorlüfter ist für diese Aufgabe prädestiniert, da dieser über eine große elektrische Leistungsaufnahme mit entsprechende großen Schwungmassen verfügt, so dass kurzfristig zwischen 30-40 A von diesem ins Kraftfahrzeugbordnetz zurückgespeist werden können.

## Patentansprüche

1. Verfahren zur Bordnetzstabilisierung eines Kraftfahrzeugbordnetzes, umfassend mindestens eine Batterie, mindestens einen elektromotorisch angetriebenen Verbraucher, und eine Einrichtung zur Erfassung eines bordnetzkritischen Zustandes,
**dadurch gekennzeichnet, dass**
bei Erfassung eines bordnetzkritischen Zustandes der elektromotorisch angetriebene Verbraucher eingeschaltet wird.

2. Verfahren nach Anspruch 1, **dadurch gekennzeichnet, dass** in Abhängigkeit von dem erfassten bordnetzkritischen Zustand der Lüfter (6) hochgeregelt wird.

3. Verfahren nach Anspruch 1 oder 2, **dadurch gekennzeichnet, dass** mittels der Einrichtung (5) zur Erfassung eines bordnetzkritischen Zustandes die Funktionalität der Batterie (3) überprüft wird.

4. Verfahren nach Anspruch 3, **dadurch gekennzeichnet, dass** die Welligkeit der Bordnetzspannung ausgewertet wird.

5. Verfahren nach einem der vorangegangenen Ansprüche, **dadurch gekennzeichnet, dass** zusätzlich Komfortverbraucher abgeschaltet werden.

6. Vorrichtung zur Bordnetzstabilisierung eines Kraftfahrzeugbordnetzes, umfassend mindestens eine Batterie, mindestens einen elektromotorisch angetriebenen Verbraucher und eine Einrichtung zur Erfassung eines bordnetzkritischen Zustandes, **dadurch gekennzeichnet, dass**
mittels der Einrichtung (5) zur Erfassung eines bordnetzkritischen Zustandes der elektromotorisch angetriebene Verbraucher (6) zuschaltbar ist.

7. Vorrichtung nach Anspruch 6, **dadurch gekennzeichnet, das** der elektromotorisch angetriebene Verbraucher als Lüfter (6) insbesondere als Verbrennungsmotorlüfter ausgebildet ist.

8. Vorrichtung nach Anspruch 6 oder 7, **dadurch gekennzeichnet, dass** mittels der Einrichtung (5) zur Erfassung eines bordnetzkritischen Zustandes die Funktionalität der Batterie (3) überprüfbar ist.

9. Vorrichtung nach Anspruch 8, **dadurch gekennzeichnet, dass** die Welligkeit der Bordnetzspannung erfassbar und auswertbar ist.

## Claims

1. Method for stabilizing a motor-vehicle electrical system, comprising at least one battery, at least one load which is driven by an electric motor, and a device for detecting a critical state of the vehicle electrical system,
**characterized in that**
the load which is driven by an electric motor is switched on when a critical state of the vehicle electrical system is detected.

2. Method according to Claim 1, **characterized in that** the speed of the fan (6) is increased as a function of the detected critical state of the vehicle electrical system.

3. Method according to Claim 1 or 2, **characterized in that** the functionality of the battery (3) is checked by means of the device (5) for detecting a critical state of the vehicle electrical system.

4. Method according to Claim 3, **characterized in that** the ripple of the voltage of the vehicle electrical system is evaluated.

5. Method according to one of the preceding claims, **characterized in that** comfort loads are additionally disconnected.

6. Apparatus for stabilizing a motor-vehicle electrical system, comprising at least one battery, at least one load which is driven by an electric motor, and a device for detecting a critical state of the vehicle electrical system,
**characterized in that**
the load (6) which is driven by an electric motor can be connected by means of the device (5) for detecting a critical state of the vehicle electrical system.

7. Apparatus according to Claim 6, **characterized in that** the load which is driven by an electric motor is in the form of a fan (6), in particular a fan of an internal combustion engine.

8. Apparatus according to Claim 6 or 7, **characterized in that** the functionality of the battery (3) can be checked by means of the device (5) for detecting a critical state of the vehicle electrical system.

9. Apparatus according to Claim 8, **characterized in that** the ripple of the voltage of the vehicle electrical system can be detected and evaluated.

## Revendications

1. Procédé de stabilisation d'un réseau de bord d'un véhicule automobile, comprenant au moins une batterie, au moins un appareillage à entraînement électromotorisé et un dispositif de détection d'un état critique du réseau de bord, **caractérisé en ce que** l'appareillage à entraînement électromotorisé est mis en marche lors de la détection d'un état critique du réseau de bord.

2. Procédé selon la revendication 1, **caractérisé en ce que** le ventilateur (6) est réglé à un niveau élevé en fonction de l'état critique détecté du réseau de bord.

3. Procédé selon la revendication 1 ou 2, **caractérisé en ce que** la fonctionnalité de la batterie (3) est vérifiée au moyen du dispositif (5) de détection d'un état critique du réseau de bord.

4. Procédé selon la revendication 3, **caractérisé en ce que** l'ondulation de la tension du réseau de bord est interprétée.

5. Procédé selon l'une des revendications précédentes, **caractérisé en ce que** les appareillages de confort sont en outre déconnectés.

6. Procédé de stabilisation d'un réseau de bord d'un véhicule automobile, comprenant au moins une batterie, au moins un appareillage à entraînement électromotorisé et un dispositif de détection d'un état critique du réseau de bord, **caractérisé en ce que** l'appareillage à entraînement électromotorisé (6) peut être mis en marche au moyen du dispositif (5) de détection d'un état critique du réseau de bord.

7. Dispositif selon la revendication 6, **caractérisé en ce que** l'appareillage à entraînement électromotorisé est réalisé sous la forme d'un ventilateur (6), notamment sous la forme d'un ventilateur pour moteur à combustion interne.

8. Dispositif selon la revendication 6 ou 7, **caractérisé en ce que** la fonctionnalité de la batterie (3) peut être vérifiée au moyen du dispositif (5) de détection d'un état critique du réseau de bord.

9. Dispositif selon la revendication 8, **caractérisé en ce que** l'ondulation de la tension du réseau de bord peut être détectée et interprétée.
